# EUROPEAN PATENT SPECIFICATION

(11) **EP 2 723 039 B1**
(45) Date of publication and mention of the grant of the patent: **13.03.2019**
(21) Application number: 11867820.0
(22) Date of filing: 15.08.2011
(51) Int. Cl.: H04L 29/08, G06F 17/24, G06F 17/30, H04L 12/24, G06F 17/22

(54) **METHOD AND SYSTEM FOR SHARING WEBPAGE LINK**
VERFAHREN UND SYSTEM ZUR GEMEINSAMEN NUTZUNG VON WEBSEITEN-VERKNÜPFUNGEN
PROCÉDÉ ET SYSTÈME POUR PARTAGER UN LIEN VERS UNE PAGE WEB

(30) Priority: 14.06.2011 CN 201110159120
(43) Date of publication of application: 23.04.2014
(73) Proprietor: ZTE Corporation, Shenzhen, Guangdong 518057 (CN)
(72) Inventor: JIA, Xin, Shenzhen Guangdong 518057 (CN)
(74) Representative: Carangelo, Pierluigi
(86) International application number: PCT/CN2011/078437
(87) International publication number: WO 2012/171255

(56) References cited:
- EP-A1- 1 672 538
- WO-A1-02/073439
- CN-A- 101 283 352
- CN-A- 101 764 853
- CN-A- 101 827 129
- US-A1- 2008 005 064
- US-A1- 2008 021 977
- US-A1- 2009 248 516

## Description

### Field of the Invention

The present invention relates to the communication field, particularly to a method and a system for sharing a web hyperlink.

### Background of the Invention

Currently, a method and a system for sharing a web hyperlink have been provided by mobile terminals to realize webpage sharing among the mobile terminals by using information. When browsing a webpage, a transmitting terminal transmits a content of the webpage to a receiving terminal via a text message or a multimedia message, and the receiving terminal checks the text message or the multimedia message to read the contents of the webpage.

When sharing a webpage to other users, a transmitter user may need to allow the other user to pay attention to only part of the contents, or add comments and notes to some contents, or highlight texts or image contents. However, in related art, these "punctuations" and notes cannot be recorded automatically and transmitted via the text message to be checked by other users, thus the comments and punctuations cannot be shared with other users.

Currently, there are no effectively solutions for solving the problem that sharing of webpage comments cannot be supported in related technologies.

Documents WO 02/073439, US 2009/248516, US 2008/005064, and US 2008/021977 provide respective technical solutions; however, the above mentioned problem still remains unsolved.

### Summary of the Invention

The present invention provide a method and a system, as disclosed in the appended claims, for sharing a web hyperlink, so as to at least solve the problem that sharing of a webpage comments cannot be supported in related technologies.

According to an aspect of the present invention, a method for sharing a web hyperlink is provided, including: a first mobile terminal adding extended information on a browsed webpage and transmitting the extended information and the web hyperlink of the webpage to a second mobile terminal; the second mobile terminal opening the webpage according to the web hyperlink and displaying the extended information on the webpage.

Before transmitting the extended information and the web hyperlink of the webpage to the second mobile terminal, the method includes: the first mobile terminal packaging the extended information and the web hyperlink in a predetermined format.

Before the second mobile terminal opening the webpage according to the web hyperlink and displaying the extended information on the webpage, the method includes: the second mobile terminal parsing out the extended information and the web hyperlink in a predetermined format.

The predetermined format at least includes one of the following markers: a marker containing the extended information, configured to mark whether or not the transmitted information includes the extended information; an extended information pattern marker, configured to mark a displayed pattern of the extended information on the webpage; an extended information location marker, configured to mark a displayed location of the extended information on the webpage; and an extended information content marker, configured to mark a displayed content of the extended information on the webpage.

The extended information at least includes one of the followings: a comment, a note and a highlighted text / image content.

The extended information is displayed by using different colors, line thicknesses, font formats and font frame background colors according to requirements.

The extended information and web hyperlink are transmitted to the second mobile terminal via a text message, a multimedia message or an electronic mail.

According to another aspect of the present invention, a system for sharing a web hyperlink is provided, including: a first mobile terminal and at least one second mobile terminal, wherein the first mobile terminal is configured to add extended information on a browsed webpage and transmit the extended information and the web hyperlink of the webpage to the second mobile terminal; the second mobile terminal is configured to open the webpage according to the web hyperlink and display the extended information on the webpage.

The first mobile terminal includes: a first marking unit, configured to add the extended information on the browsed webpage; and a first information unit, configured to transmit the extended information and the web hyperlink of the webpage to the second mobile terminal.

The second mobile terminal includes: a second browser unit, configured to open the webpage according to the web hyperlink; a second marking unit, configured to display the extended information on the webpage.

The first mobile terminal also includes: a first link unit, configured to package the extended information and the web hyperlink in a predetermined format.

The second mobile terminal also includes: a second link unit, configured to parse the extended information and the web hyperlink in a predetermined format.

By adopting the present invention, a web hyperlink containing the extended information is transmitted to a receiver by a transmitter, so that the receiver is able to display the extended information when opening the web hyperlink. In this way, opinions and comments etc. about the content of the webpage of the transmitter can be shared with the receiver, thus improving personalization and richness of webpage contents shared among terminals and improving user experience.

### Brief Description of the Drawings

The accompanying drawings illustrated here provide further understanding to the present invention and constitute a part of the application. The exemplary embodiments of the present invention and the illustrations thereof are used for explaining the present invention, instead of constituting an improper limitation to the present invention. In the accompanying drawings:
Fig. 1 is a flowchart of a method for sharing a web hyperlink according to embodiment 1 of the present invention;
Fig. 2 is a schematic diagram of a system for sharing a web hyperlink according to embodiment 2 of the present invention;
Fig. 3 is a schematic diagram of a system for sharing a web hyperlink according to embodiment 3 of the present invention;
Fig. 4 is a flowchart of a method for sharing a web hyperlink according to embodiment 4 of the present invention; and
Fig. 5 is a schematic diagram of the display of a page containing extended information according to embodiment 4 of the present invention.

### Detailed Description of the Embodiments

The present invention will be described in details below with reference to the accompanying drawings and in combination with the embodiments. It should be noted that, if there is no conflict, the embodiments of the present invention and the characteristics in the embodiments can be combined with one another.

### Embodiment 1

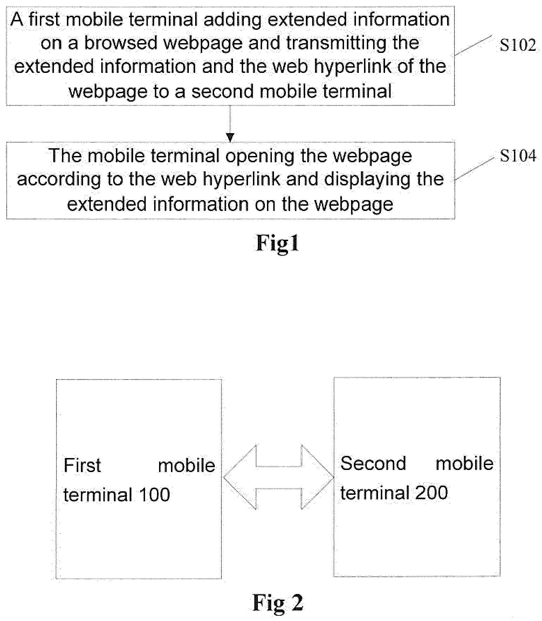

Fig. 1 is a flowchart of a method for sharing a web hyperlink according to embodiment 1 of the present invention. As shown in Fig. 1, the following steps are included:
Step S102: a first mobile terminal adding extended information on a browsed webpage and transmitting the extended information and the web hyperlink of the webpage to a second mobile terminal.
Step S104: the second mobile terminal opening the webpage according to the web hyperlink and displaying the extended information on the webpage.

In the present embodiment, a web hyperlink containing extended information is transmitted to a receiver by a transmitter, so that the receiver is able to display the extended information when opening the web hyperlink. In this way, opinions and comments etc. about contents of the webpage of the transmitter can be shared with the receiver, thus improving personalization and richness of webpage contents shared among terminals and improving user experience.

In Step S102, before transmitting the extended information and the web hyperlink of the webpage to the second mobile terminal, the method also includes: the first mobile terminal packaging the extended information and the web hyperlink in a predetermined format.

In Step S104, before the second mobile terminal opening the webpage according to the web hyperlink and displaying the extended information on the webpage, the method also includes: the second mobile terminal parsing out the extended information and the web hyperlink in a predetermined format,
In the above, the predetermined format at least includes one of the following markers: a marker containing the extended information, configured to mark whether or not the transmitted information contains the extended information; an extended information pattern marker, configured to mark a displayed pattern of the extended information on the webpage; an extended information location marker, configured to mark a displayed location of the extended information on the webpage; and an extended information content marker, configured to mark a displayed content of the extended information on the webpage.

In the above, the extended information at least includes one of the followings: a comment, a note and a highlighted text/ image content.

In the above , the extended information is displayed by using different colors, line thicknesses, font formats and font frame background colors according to kinds of requirements.

In the above, the extended information and web hyperlink may be transmitted to the second mobile terminal via a text message, a multimedia message or an electronic mail.

### Embodiment 2

Fig. 2 is a schematic diagram of a system for sharing a web hyperlink according to embodiment 2 of the present invention. As shown in Fig. 2, the system includes a first mobile terminal 100 and at least one second mobile terminal 200.

The first mobile terminal 100 is configured to add extended information on a browsed webpage and transmit the extended information and the web hyperlink of the webpage to the second mobile terminal; the second mobile terminal 200 is configured to open the webpage according to the web hyperlink and display the extended information on the webpage.

In the present embodiment, a web hyperlink containing extended information is transmitted to a receiver by a transmitter, so that the receiver is able to display the extended information when opening the web hyperlink. In this way, opinions and comments etc. about contents of the webpage of the transmitter can be shared with the receiver, thus improving personalization and richness of webpage contents shared among terminals and improving user experience.

### Embodiment 3

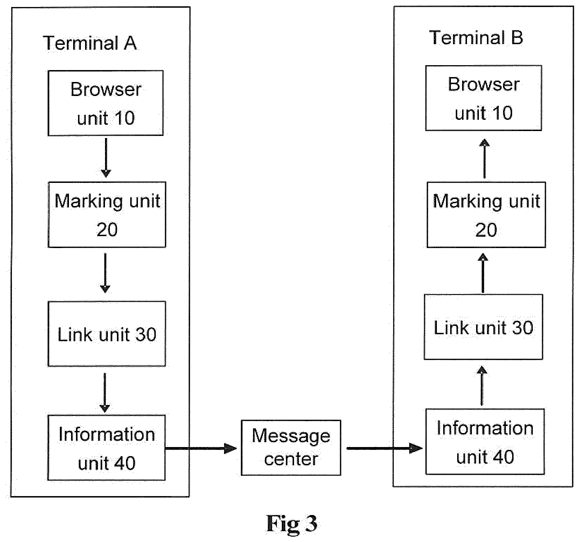

Fig. 3 is a schematic diagram of a system for sharing a web hyperlink according to embodiment 3 of the present invention. As shown in Fig. 3, the system includes a terminal A and a terminal B, wherein the terminal A and the terminal B include a webpage browser unit 10, a marking unit 20, a link unit 30 and an information unit, respectively.

The webpage browser unit 10 is configured to browse webpage information on a Wireless Application Protocol (WAP) website according to an instruction request inputted by a user, receive and display the webpage information on the WAP website, which is the same as the traditional art.

The marking unit 20 is configured to mark the current webpage for the user, complete marking on the webpage according to the instruction inputted by the user, add the marker information of the user and deliver all added information together with the address of the current webpage to the link unit 30 to be processed. The marker information may use different colors, line thicknesses, font formats and font frame background colors etc., which can be set by the user.

For a transmitter terminal, a menu for the user to mark the webpage is added. The user may highlight some contents, add notes somewhere and punctuate a webpage content etc. via the menu on the webpage.

For a receiver terminal, the extended information parsed out by the link unit 30 is displayed on a webpage interface, and the notes and the punctuations to the webpage content etc. are added somewhere according to a relative location and content information in the extended information.

If a circled annotation is parsed out, then a box or a circle is added on the corresponding text content on the webpage interface. If annotation is parsed out, then the content of the annotation etc. is displayed at a location of a corresponding character on the webpage interface.

The link unit 30 provides an interface between the webpage browser unit 10 and the information unit 40. When webpage browsing is performed by the webpage browser unit 10, the menu of sending a webpage address via an information format is added. When the user chooses to transmit the web hyperlink, the link unit 30 packages the web hyperlink and note information in a specific format and delivers them to the information unit 40.

For the transmitter terminal, the to-be-transmitted web hyperlink and punctuation information are packaged in a specific format; for the receiver terminal, after the information content is parsed in a specific format, the corresponding web hyperlink is opened and the punctuation information is displayed.

The link unit 30 may package the webpage hyperlink and the note information according to the following format:

```
     |InternetComment|
     URL: website address link // the transmitted web hyperlink address
     {start location-end location}//circled webpage content; there may be multiple
 pieces of circled webpage content
     <start location-end location>//highlighted webpage content; there may be
 multiple pieces of highlighted webpage content
     [location-annotation information]//annotation information and location
 information; there may be multiple pieces of annotation information and location
 information.
```

After the user transmits the web hyperlink via the menu provided by the link unit 30, the link unit 30 packages a note content and a relative location inputted by the user (wherein the annotation information inputted by the user is used directly by the content and the relative location is obtained through a sequence of characters in the webpage) in a specific format and delivers the note content and the relative location to the information unit 40.

For the receiver terminal, after a text message from the other terminal is received by the information unit 40, a user information (TP-UD) field of the text message is parsed. If the parsing result of the beginning part of the (TP-UD) field is |InternetComment|, the text message is processed as a text message containing an extended web hyperlink. When the user clicks the message to check it, the content of the text message is not displayed and the corresponding webpage address and extended information packaged in the text message are parsed out by the link unit 30 directly. The webpage browser unit 10 is started to open the corresponding webpage according to a predefined parsing method and a marker which is made previously is displayed by the marking unit 20 on the opened webpage.

The parsing method is: the content after a "URL:" is parsed out as a webpage address which is opened by the webpage browser unit 10 directly; the content in "{...}" is parsed out as a circled annotation which is displayed as a circled annotation on the webpage interface; the content in [...] is parsed out as a note and the content of the note is displayed at a corresponding character location on the webpage interface.

The information unit 40 is configured to complete an information receiving and transmitting function. The information unit 40 may send the information via a text message, a multimedia message or an electronic mail.

For the transmitter terminal, the transmitter transmits information to a target user according to a target number inputted by the user; the information unit 40, between which and the link unit 30, there is an interface, is configured to extract the webpage address and the extended information delivered from the link unit 30.

For the receiver terminal, the receiver receives and displays the text message. If the text message is a normal text message, it is displayed directly, which is the same to the traditional art. If the text message is a link message containing the extended information, the text message is displayed on a standby interface or an inbox in a manner different from that of the normal text message, so that the webpage browser unit 10 is started directly instead of displaying the content of the text message when the user clicks the unread text message, to parse the web hyperlink packaged in the text message, open the corresponding webpage, and parse and display the extended information packaged in the content of the text message on the webpage interface. The information unit 40 and the webpage browser unit 10 are provided with an interface to open the corresponding webpage content via the webpage browser unit 10 according to the webpage address packaged in the information; the information unit 40 and the marking unit 20 are provided with an interface to display the extended information packaged in the information on the webpage interface by the marking unit 20.

In the present embodiment, a marking unit 20 and a link unit 30 are added in a mobile terminal, so that when a user is browsing a text or multimedia webpage information by the mobile terminal, the user can send the browsed webpage information and circled information added by the user to other users, and a receiver user is enabled to pay attention to key contents and share information such as notes and comments etc. of a transmitter user. When the user is browsing a webpage by a webpage browser unit 10, the webpage browser unit 10 requests webpage information on a WAP website according to an instruction inputted by the user and displays the received webpage information from the WAP website on a browser interface of the mobile terminal. When the user is browsing the webpage information on the browser interface of the mobile terminal and when an important or interesting webpage is discovered and the user wishes to send the browsed meaningful webpage information to other users, comments and note information can be added on the webpage by the marking unit, or some contents are highlighted and transmitted to the information unit by the link unit and transmitted to other users by a text message.

### Embodiment 4

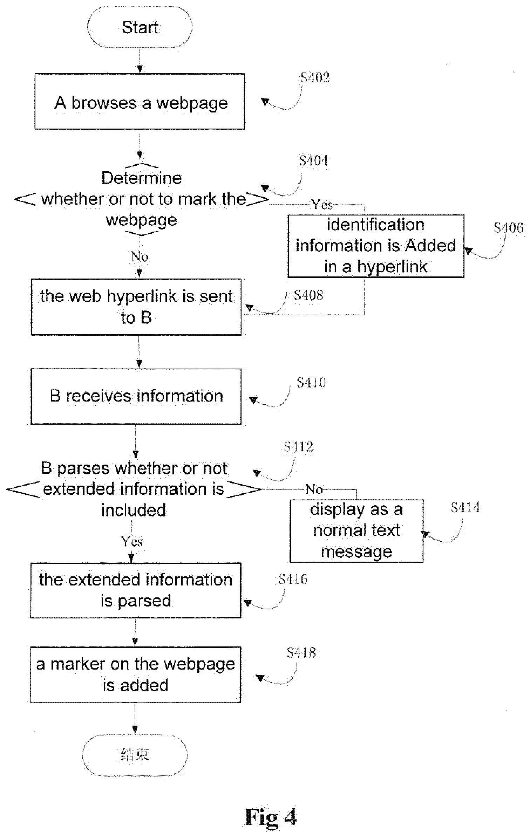

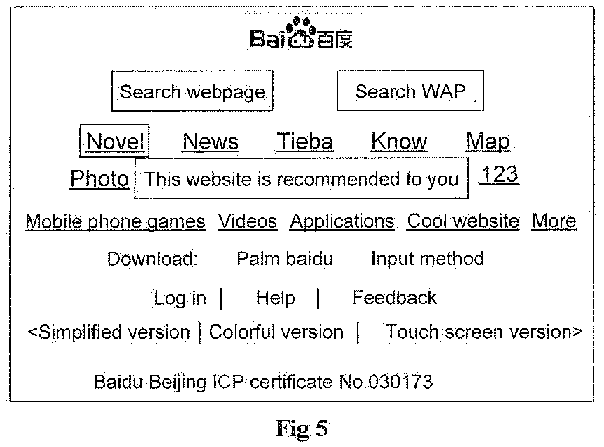

Fig. 4 is a flowchart of a method for sharing a web hyperlink according to embodiment 4 of the present invention and fig. 5 is a schematic diagram of the display of a page containing extended information according to embodiment 4 of the present invention.

The present embodiment adopts the system structure in embodiment 3. As shown in Fig. 4 and Fig. 5, the following steps are included:
Step S402: a terminal A browses a webpage http://wap.baidu.com/ by a webpage unit 10.
Step S404: if the terminal A sends the web hyperlink directly, Step 408 is performed; otherwise, Step 406 is performed.
Step S406: the extended information is added in the hyperlink, the note according to a menu provided by a marking unit 20 is added, and the note information made by a user on the webpage is: the "novel" hyperlink in the webpage is circled with the annotation information of "this website is recommended to you!".
Step S408: the web hyperlink is transmitted from the terminal A to a terminal B via a link unit 30 and an information unit 40; an example of a packaging format corresponding to an added note is described as follows:

   ```
     |InternetComment|
     URL: http://wap.baidu.com/
     {001-002}
     [002-this website is recommended to you!].
     An example of a packaging format corresponding to the case that a note is not
 added is described as follows:
     URL: http://wap.baidu.com/
```
Step S410: the terminal B receives the information.
Step S412: the terminal B parses the information and determines whether or not the information is a link text message including extended information, and if yes, Step 416 is performed; otherwise, Step 414 is performed.
Step S414: the information is displayed the same as a normal text message.
Step S416: the terminal B parses the text message by the link unit 30 and opens the website address and the extended information; the parsing method is: the content after a "URL:" is parsed out as a webpage address which is opened by the webpage browser unit 10 directly; the content in "{001-002}" is parsed out as a circled annotation, i.e. a box is added to the "novel" location on a webpage interface; the content in [002-this website is recommended to you!] is parsed out as an annotation, and the annotation content of "this website is recommended to you!" is displayed on the location of the second character, i.e. "novel" on the webpage interface.
Step S418: the terminal B, according to the parsed and obtained extended information, adds marking information to the opened webpage by the marking unit.

In each embodiment above of the present invention, a method which is an improvement, i.e., a method for sending a web hyperlink containing extended information is provided based on a currently-realized method for sending a web hyperlink in a mobile terminal, so that when a transmitter sends the web hyperlink to a receiver via information, the transmitter user is enabled to add information including a note, a comment, an annotation and a punctuation etc. to the content of the webpage and the mobile terminal displays related marked information of the transmitter user when the receiver user opens the web hyperlink. By doing so, opinions and comments etc. about the content of the webpage of the transmitter user can be shared with the receiver user, thus improving personalization and richness of webpage contents shared among terminals, improving the user experience and saving time and cost for the user, so that when the user wants to share information of comments and punctuations etc. on the webpage with other people, the user does not need to send the information additionally.

Obviously, those skilled in the art should understand that the modules or steps above of the present invention may be implemented by general computing devices and centralized in a single computing device or distributed in a network consisting of multiple computing devices. Optionally, the modules or steps may be implemented by program codes executable by the computing devices, so that they may be stored in a storage device and executed by the computing device. In some cases, the steps as shown or as described may be executed according to a sequence different from the sequence herein, or the modules or steps may be respectively made into integrated circuit modules, or multiple modules or steps of these modules or steps may be made into a single integrated circuit module. By doing so, the present invention is not limited to any specific combination of hardware and software.

The above are only preferred embodiments of the present invention and should not be used to limit the present invention. For those skilled in the art, the present invention may have various modifications and changes. Any modifications, equivalent replacements, improvements and the like within the principle of the present invention shall fall within the scope of protection of the present invention.

## Claims

1. A method for sharing a web hyperlink, **characterized by** comprising:
a first mobile terminal adding extended information on a browsed webpage and transmitting the added extended information and web hyperlink of the webpage to a second mobile terminal; and
the second mobile terminal opening the webpage according to the web hyperlink and displaying the extended information on the webpage;
wherein before transmitting the extended information and the web hyperlink of the webpage to the second mobile terminal, the method comprising: the first mobile terminal packaging the extended information and the web hyperlink in a predetermined format; wherein the predetermined format at least comprises one of the following markers: an extended information pattern marker, configured to mark a displayed pattern of the extended information on the webpage; an extended information location marker, configured to mark a displayed location of the extended information on the webpage; and an extended information content marker, configured to mark a displayed content of the extended information on the webpage;
**characterised in that** the second mobile terminal opening the webpage according to the web hyperlink and displaying the extended information on the webpage, comprises: receiving, by the second mobile terminal, a message from the first mobile terminal; the second mobile terminal parsing the received message and determining whether or not the received message is a link text message including the extended information; if yes, the second mobile terminal parsing the link text message, opening the web hyperlink of the webpage and displaying the extended information, according to said one or more markers, instead of displaying text of the received message; if no, the second mobile terminal displaying the received message the same as a normal text message.

2. The method according to claim 1, **characterized in that**, before the second mobile terminal opening the webpage according to the web hyperlink and displaying the extended information on the webpage, the method comprising:
the second mobile terminal parsing out the extended information and the web hyperlink in the predetermined format.

3. The method according to claim 1, **characterized in that**, the extended information at least comprises one of the followings: a comment, a note, and a highlighted text/ image content.

4. The method according to claim 3, **characterized in that** the extended information is displayed by using different colors, line thicknesses, font formats and font frame background colors according to requirements.

5. The method according to any one of claims 1 to 4, **characterized in that** the extended information and the web hyperlink are transmitted to the second mobile terminal via a text message, a multimedia message or an electronic mail.

6. A system for sharing a web hyperlink, **characterized by** comprising: a first mobile terminal and at least one second mobile terminal, wherein
the first mobile terminal is configured to add extended information on a browsed webpage and transmit the added extended information and web hyperlink of the webpage to the second mobile terminal;
the second mobile terminal is configured to open the webpage according to the web hyperlink and display the extended information on the webpage;
a first link unit of the first mobile terminal configured to package the extended information and the web hyperlink in a predetermined format; wherein the predetermined format at least comprises one of the following markers: an extended information pattern marker, configured to mark a displayed pattern of the extended information on the webpage; an extended information location marker, configured to mark a displayed location of the extended information on the webpage; and an extended information content marker, configured to mark a displayed content of the extended information on the webpage;
**characterised in that** the second mobile terminal is further configured to execute at least following steps: opening the webpage according to the web hyperlink and displaying the extended information on the webpage, comprises: receiving a message from the first mobile terminal; the second mobile terminal parsing the received message and determining whether or not the received message is a link text message including the extended information; if yes, the second mobile terminal parsing the link text message, opening the web hyperlink of the webpage and displaying the extended information, according to said one or more markers, instead of displaying text of the received message; if no, the second mobile terminal displaying the received message the same as a normal text message.

7. The system according to claim 6, **characterized in that** the first mobile terminal comprises:
a first marking unit, configured to add the extended information on the browsed webpage; and
a first information unit, configured to transmit the extended information and the web hyperlink of the webpage to the second mobile terminal.

8. The system according to claim 7, **characterized in that** the second mobile terminal comprises:
a second browser unit, configured to open the webpage according to the web hyperlink; and
a second marking unit, configured to display the extended information on the webpage.

9. The system according to claim 6, **characterized in that** the second mobile terminal comprises:
a second link unit, configured to parse the extended information and the web hyperlink in the predetermined format.

## Patentansprüche

1. Verfahren zur gemeinsamen Nutzung eines Web-Hyperlinks, **dadurch gekennzeichnet, dass** es umfasst:
ein erstes mobiles Endgerät, das erweiterte Informationen auf einer durchsuchten Webseite hinzufügt und die hinzugefügten erweiterten Informationen und den Web-Hyperlink der Webseite an ein zweites mobiles Endgerät überträgt; und
das zweite mobile Endgerät die Webseite gemäß dem Web-Hyperlink öffnet und die erweiterten Informationen auf der Webseite anzeigt;
wobei vor dem Übertragen der erweiterten Informationen und des Web-Hyperlinks der Webseite an das zweite mobile Endgerät das Verfahren umfasst: Packen der erweiterten Informationen und des Web-Hyperlinks in ein vorgegebenes Format durch das erste mobile Endgerät; wobei das vorgegebene Format mindestens eine der folgenden Markierungen umfasst: eine Mustermarkierung für erweiterte Informationen, die konfiguriert ist, um ein angezeigtes Muster der erweiterten Information auf der Webseite zu markieren; eine Ortsmarkierung für erweiterte Informationen, die konfiguriert ist, um einen angezeigten Ort der erweiterten Informationen auf der Webseite zu markieren; und eine Inhaltsmarkierung für erweiterte Informationen, die konfiguriert ist, um einen angezeigten Inhalt der erweiterten Information auf der Webseite zu markieren;
**dadurch gekennzeichnet, dass**
das Öffnen der Webseite gemäß dem Web-Hyperlink und Anzeigen der erweiterten Informationen auf der Webseite durch das mobile Endgerät umfasst: Empfangen einer Nachricht vom ersten mobilen Endgerät durch das zweite mobile Endgerät;
das zweite mobile Endgerät die empfangene Nachricht durch Syntaxanalyse ermittelt und feststellt, ob die empfangene Nachricht eine Link-Textnachricht ist, die die erweiterten Informationen beinhaltet; wenn ja, das zweite mobile Endgerät die Link-Textnachricht mittels Syntaxanalyse ermittelt, den Web-Hyperlink der Webseite öffnet und anstelle des Textes der empfangenen Nachricht die erweiterten Informationen gemäß der einen oder den mehreren Markierungen anzeigt; wenn nein, das zweite mobile Endgerät die empfangene Nachricht wie eine normale Textnachricht anzeigt.

2. Verfahren nach Anspruch 1, **dadurch gekennzeichnet, dass** vor dem Öffnen der Webseite gemäß dem Web-Hyperlink und dem Anzeigen der erweiterten Informationen auf der Webseite durch das zweite Endgerät das Verfahren umfasst:
Ermitteln der erweiterten Informationen und des Web-Hyperlinks in dem vorgegebenen Format durch Syntaxanalyse durch das zweite mobile Endgerät.

3. Verfahren nach Anspruch 1, **dadurch gekennzeichnet, dass** die erweiterten Informationen mindestens eines des Folgenden umfassen: einen Kommentar, eine Notiz und einen hervorgehobenen Text-/Bildinhalt.

4. Verfahren nach Anspruch 3, **dadurch gekennzeichnet, dass** die erweiterten Informationen je nach Anforderung unter Verwendung unterschiedlicher Farben, Liniendicken, Schriftformate und Hintergrundfarben für Schriftrahmen angezeigt werden.

5. Verfahren nach einem beliebigen der Ansprüche 1 bis 4, **dadurch gekennzeichnet, dass** die erweiterten Informationen und der Web-Hyperlink über eine Textnachricht, eine Multimedianachricht oder eine E-Mail an das zweite mobile Endgerät übertragen werden.

6. System zur gemeinsamen Nutzung eines Web-Hyperlinks, **dadurch gekennzeichnet, dass** das Verfahren umfasst: ein erstes mobiles Endgerät und mindestens ein zweites mobiles Endgerät, wobei
das erste mobile Endgerät konfiguriert ist, um erweiterte Informationen auf einer durchsuchten Webseite hinzuzufügen und die hinzugefügten erweiterten Informationen und den Web-Hyperlink der Webseite an das zweite mobile Endgerät zu übertragen;
das zweite mobile Endgerät konfiguriert ist, um die Webseite gemäß dem Web-Hyperlink zu öffnen und die erweiterten Informationen auf der Webseite anzuzeigen;
eine erste Verbindungseinheit des ersten mobilen Endgeräts konfiguriert ist, um die erweiterten Informationen und den Web-Hyperlink in ein vorgegebenes Format zu packen; wobei das vorgegebene Format mindestens eine der folgenden Markierungen umfasst: eine Mustermarkierung für erweiterte Informationen, die konfiguriert ist, um ein angezeigtes Muster der erweiterten Information auf der Webseite zu markieren; eine Ortsmarkierung für erweiterte Informationen, die konfiguriert ist, um einen angezeigten Ort der erweiterten Informationen auf der Webseite zu markieren; und eine Inhaltsmarkierung für erweiterte Informationen, die konfiguriert ist, um einen angezeigten Inhalt der erweiterten Information auf der Webseite zu markieren;
**dadurch gekennzeichnet, dass**
das zweite mobile Endgerät ferner konfiguriert ist, um mindestens die folgenden Schritte auszuführen: Öffnen der Webseite gemäß dem Web-Hyperlink und Anzeigen der erweiterten Informationen auf der Webseite, umfassend:
Empfangen einer Nachricht von dem ersten mobilen Endgerät, wobei das zweite mobile Endgerät die empfangene Nachricht mittels Syntaxanalyse ermittelt und bestimmt, ob die empfangene Nachricht eine Link-Textnachricht ist, die die erweiterte Informationen beinhaltet; wenn ja, das zweite mobile Endgerät die Link-Textnachricht mittels Syntaxanalyse ermittelt, den Web-Hyperlink der Webseite öffnet und anstelle des Textes der empfangenen Nachricht die erweiterten Informationen gemäß der einen oder den mehreren Markierungen anzeigt; wenn nein, das zweite mobile Endgerät die empfangene Nachricht wie eine normale Textnachricht anzeigt.

7. System nach Anspruch 6, **dadurch gekennzeichnet, dass** das erste mobile Endgerät umfasst:
eine erste Markierungseinheit, die konfiguriert ist, um die erweiterten Informationen auf der durchsuchten Webseite hinzuzufügen; und
eine erste Informationseinheit, die konfiguriert ist, um die erweiterten Informationen und den Web-Hyperlink der Webseite an das zweite mobile Endgerät zu übertragen.

8. System nach Anspruch 7, **dadurch gekennzeichnet, dass** das zweite mobile Endgerät umfasst:
eine zweite Browser-Einheit, die konfiguriert ist, um die Webseite gemäß dem Web-Hyperlink zu öffnen; und
eine zweite Markierungseinheit, die konfiguriert ist, um die erweiterten Informationen auf der Webseite anzuzeigen.

9. System nach Anspruch 6, **dadurch gekennzeichnet, dass** das zweite mobile Endgerät umfasst:
eine zweite Verbindungseinheit, die konfiguriert ist, um die erweiterten Informationen und den Web-Hyperlink in dem vorgegebenen Format zu analysieren.

## Revendications

1. Procédé pour partager un lien hypertexte Web, **caractérisé en ce qu'**il comprend :
un premier terminal mobile ajoutant des informations étendues sur une page Web consultée et transmettant les informations étendues ajoutées et un lien hypertexte Web de la page Web à un second terminal mobile ; et
le second terminal mobile ouvrant la page Web en fonction du lien hypertexte Web et affichant les informations étendues sur la page Web ;
avant de transmettre les informations étendues et le lien hypertexte Web de la page Web au second terminal mobile, le procédé comprenant : le premier terminal mobile regroupant les informations étendues et le lien hypertexte Web dans un format prédéfini ; le format prédéfini comprenant au moins l'un des repères suivants : un repère de modèle d'informations étendues conçu pour marquer un modèle affiché des informations étendues sur la page Web ; un repère d'emplacement d'informations étendues, conçu pour marquer un emplacement affiché des informations étendues sur la page Web ; et un repère de contenu d'informations étendues, conçu pour marquer un contenu affiché des informations étendues sur la page Web ;
**caractérisé en ce que**
le second terminal mobile ouvrant la page Web en fonction du lien hypertexte Web et affichant les informations étendues sur la page Web, comprend : la réception, par le second terminal mobile, d'un message du premier terminal mobile ;
l'analyse par le second terminal mobile du message reçu et la détermination de savoir si le message reçu est un message texte de lien incluant les informations étendues ou non ; dans l'affirmative, l'analyse par le second terminal mobile du message texte du lien, l'ouverture du lien hypertexte Web de la page Web et l'affichage des informations étendues, en fonction desdits un ou plusieurs repères, au lieu d'afficher le texte du message reçu ; dans la négative, l'affichage par le second terminal mobile du message reçu de la même manière qu'un message texte normal.

2. Procédé selon la revendication 1, **caractérisé en ce que**, avant que le second terminal mobile n'ouvre la page Web selon le lien hypertexte Web et n'affiche les informations étendues sur la page Web, le procédé comprend :
le second terminal mobile analyse les informations étendues et le lien hypertexte Web dans le format prédéfini.

3. Procédé selon la revendication 1, **caractérisé en ce que** les informations étendues comprennent au moins l'un des éléments suivants : un commentaire, une note et un contenu texte/image en surbrillance.

4. Procédé selon la revendication 3, **caractérisé en ce que** les informations étendues s'affichent à l'aide de couleurs, d'épaisseurs de trait, de formats de police de caractères et de couleurs de fond du cadre de police de caractères différents, selon les besoins.

5. Procédé selon l'une quelconque des revendications 1 à 4, **caractérisé en ce que** les informations étendues et le lien hypertexte Web sont transmis au second terminal mobile par l'intermédiaire d'un message texte, d'un message multimédia ou d'un courrier électronique.

6. Système pour partager un lien hypertexte Web, **caractérisé en ce qu'**il comprend : un premier terminal mobile et au moins un second terminal mobile,
le premier terminal mobile étant configuré pour ajouter des informations étendues sur une page Web consultée et pour transmettre les informations étendues ajoutées et un lien hypertexte Web de la page Web au second terminal mobile ;
le second terminal mobile étant configuré pour ouvrir la page Web en fonction du lien hypertexte Web et pour afficher les informations étendues sur la page Web ;
une première unité de liaison du premier terminal mobile conçue pour regrouper les informations étendues et le lien hypertexte Web dans un format prédéfini ; le format prédéfini comprenant au moins l'un des repères suivants : un repère de modèle d'informations étendues, conçu pour marquer un modèle affiché des informations étendues sur la page Web ; un repère d'emplacement d'informations étendues, conçues pour marquer un emplacement affiché des informations étendues sur la page Web ; et un repère de contenu d'informations étendues, conçu pour marquer un contenu affiché des informations étendues sur la page Web ;
**caractérisé en ce que**
le second terminal mobile est en outre configuré pour exécuter au moins les étapes suivantes : l'ouverture de la page Web en fonction du lien hypertexte Web et l'affichage des informations étendues sur la page Web, comprenant :
la réception d'un message du premier terminal mobile, le second terminal mobile analysant le message reçu et déterminant si le message reçu est un message texte de lien comprenant les informations étendues ou non ; dans l'affirmative, le second terminal mobile analysant le message texte du lien, ouvrant le lien hypertexte Web de la page Web et affichant les informations étendues, en fonction desdits un ou plusieurs repères, au lieu d'afficher le texte du message reçu, dans la négative, le second terminal mobile affichant le message reçu de la même manière qu'un message texte normal.

7. Système selon la revendication 6, **caractérisé en ce que** le premier terminal mobile comprend :
une première unité de marquage, conçue pour ajouter les informations étendues sur la page Web consultée ; et
une première unité d'informations, conçue pour transmettre les informations étendues et le lien hypertexte Web de la page Web au second terminal mobile.

8. Système selon la revendication 7, **caractérisé en ce que** le second terminal mobile comprend :
une seconde unité de navigateur, configurée pour ouvrir la page Web en fonction du lien hypertexte Web ; et
une seconde unité de marquage, configurée pour afficher les informations étendues sur la page Web.

9. Système selon la revendication 6, **caractérisé en ce que** le second terminal mobile comprend :
une seconde unité de liaison, configurée pour analyser les informations étendues et le lien hypertexte Web dans le format prédéfini.
